# EUROPEAN PATENT APPLICATION

(11) **EP 4 651 061 A1**
(43) Date of publication of application: **19.11.2025**
(21) Application number: 24205184.5
(22) Date of filing: 08.10.2024
(51) Int. Cl.: G06Q 30/0282

(54) **TECHNIQUES FOR MANAGING INFORMATION FOR DIGITAL ASSETS**

(30) Priority: 13.05.2024 US 202463646117 P
(71) Applicant: Apple Inc., Cupertino, CA 95014 (US)
(72) Inventor: PENG, Fei, Cupertino, 95014 (US); DENG, Zhui, Cupertino, 95014 (US); PUROHIT, Sonia V., Cupertino, 95014 (US); YUAN, Kai, Cupertino, 95014 (US); SALEHIAN, Hesamoddin, Cupertino, 95014 (US); CHENNU, Srivas, Cupertino, 95014 (US); DAI, Zhengkun, Cupertino, 95014 (US)
(74) Representative: Barton, Russell Glen

(57) **Abstract**

One embodiment sets forth a method for managing information for digital assets. According to some embodiments, the method can be implemented by a computing device, and includes the steps of (1) receiving a plurality of reviews associated with a digital asset, (2) for each review of the plurality of reviews: (i) identifying, based at least in part on a language of the review, at least one respective machine learning model, (ii) retaining the review within, or removing the review from, the plurality of reviews based at least in part on a respective safety metric output by the at least one respective machine learning model in response to receiving the review as input, and (iii) when the review is retained within the plurality of reviews: establishing, for the review using the at least one respective machine learning model, respective sentiment and informativeness metrics, (3) generating a summary for the digital asset based at least in part on the sentiment and informativeness metrics, and (4) causing the summary to be displayed within a user interface associated with the digital asset.

## Description

### FIELD

The described embodiments relate generally to managing information for digital assets. More particularly, the described embodiments set forth techniques for filtering and summarizing online reviews for digital assets.

### BACKGROUND

The proliferation of online stores has contributed to the popularity of online reviews. Typically, an individual purchases a product through an online store and subsequently leaves an online review that consists of both a rating and a narrative for others to read. The rating can serve as an objective quality indicator (e.g., a star rating) for the online store itself, a product purchased through the online store, and so on. Similarly, the narrative can serve as a subjective quality indicator (e.g., one or more written sentences) for the online store, purchased product, and so on. These online reviews are valuable in that they can help prospective patrons make informed decisions about whether to utilize the online store, to purchase a particular product through the online store, and so on.

Notably, online reviews can be helpful to the extent that they provide substantive and genuine information. Unfortunately, for a variety of reasons, online reviews are often littered with ones that are ingenuine. For example, individuals often are incentivized to leave online reviews in exchange for a discount on a product or some other incentive. In another example, fake online reviews may be offered as a service by entities that utilize bot accounts, contracted online review submitters (e.g., humans hired to submit fake reviews), and so on.

As described above, online reviews typically include both rating and review components. Notably, it can be easy to provide the rating component (e.g., selecting a star), but it takes considerable effort to provide a genuine review component (e.g., typing a narrative). In this regard, the review components of ingenuine online reviews are often completed in haste, e.g., where users input gibberish, irrelevant, etc., text to satisfy the criteria to submit the online review (e.g., a minimum number of characters, words, etc.). As a result, a given online store can be associated with numerous online reviews that include useless review components. In this regard, it can be difficult for online stores to effectively organize, qualify, etc., online reviews, let alone generate summaries of the online reviews that accurately capture the overall (and actual) sentiment of the reviewers.

Accordingly, what is needed are improved techniques for managing online reviews.

### SUMMARY

The described embodiments relate generally to managing information for digital assets. More particularly, the described embodiments set forth techniques for filtering and summarizing online reviews for digital assets.

One embodiment sets forth a method for managing information for digital assets. According to some embodiments, the method can be implemented by a computing device, and includes the steps of (1) receiving a plurality of reviews associated with a digital asset, (2) for each review of the plurality of reviews: (i) identifying, based at least in part on a language of the review, at least one respective machine learning model, (ii) retaining the review within, or removing the review from, the plurality of reviews based at least in part on a respective safety metric output by the at least one respective machine learning model in response to receiving the review as input, and (iii) when the review is retained within the plurality of reviews: establishing, for the review using the at least one respective machine learning model, respective sentiment and informativeness metrics, (3) generating a summary for the digital asset based at least in part on the sentiment and informativeness metrics, and (4) causing the summary to be displayed within a user interface associated with the digital asset.

Other embodiments include a non-transitory computer readable storage medium configured to store instructions that, when executed by a processor included in a computing device, cause the computing device to carry out the various steps of any of the foregoing methods. Further embodiments include a computing device that is configured to carry out the various steps of any of the foregoing methods.

Other aspects and advantages of the embodiments described herein will become apparent from the following detailed description taken in conjunction with the accompanying drawings which illustrate, by way of example, the principles of the described embodiments.

### BRIEF DESCRIPTION OF THE DRAWINGS

The included drawings are for illustrative purposes and serve only to provide examples of possible structures and arrangements for the disclosed inventive apparatuses and methods for providing wireless computing devices. These drawings in no way limit any changes in form and detail that may be made to the embodiments by one skilled in the art without departing from the spirit and scope of the embodiments. The embodiments will be readily understood by the following detailed description in conjunction with the accompanying drawings, wherein like reference numerals designate like structural elements.
FIG. 1 illustrates a block diagram of different components of a system that can be configured to implement the various techniques described herein, according to some embodiments.
FIG. 2 illustrates a block diagram of a more detailed view of a digital asset manager, according to some embodiments.
FIG. 3 illustrates a method for managing information for digital assets, according to some embodiments.
FIG. 4 illustrates conceptual diagrams of different user interfaces that can be displayed for managing information for digital assets, according to some embodiments.
FIG. 5 illustrates a detailed view of a computing device that can be used to implement the various components described herein, according to some embodiments.

### DETAILED DESCRIPTION

Representative applications of apparatuses and methods according to the presently described embodiments are provided in this section. These examples are being provided solely to add context and aid in the understanding of the described embodiments. It will thus be apparent to one skilled in the art that the presently described embodiments can be practiced without some or all of these specific details. In other instances, well known process steps have not been described in detail in order to avoid unnecessarily obscuring the presently described embodiments. Other applications are possible, such that the following examples should not be taken as limiting.

The described embodiments relate generally to managing information for digital assets. More particularly, the described embodiments set forth techniques for filtering and summarizing online reviews for digital assets.

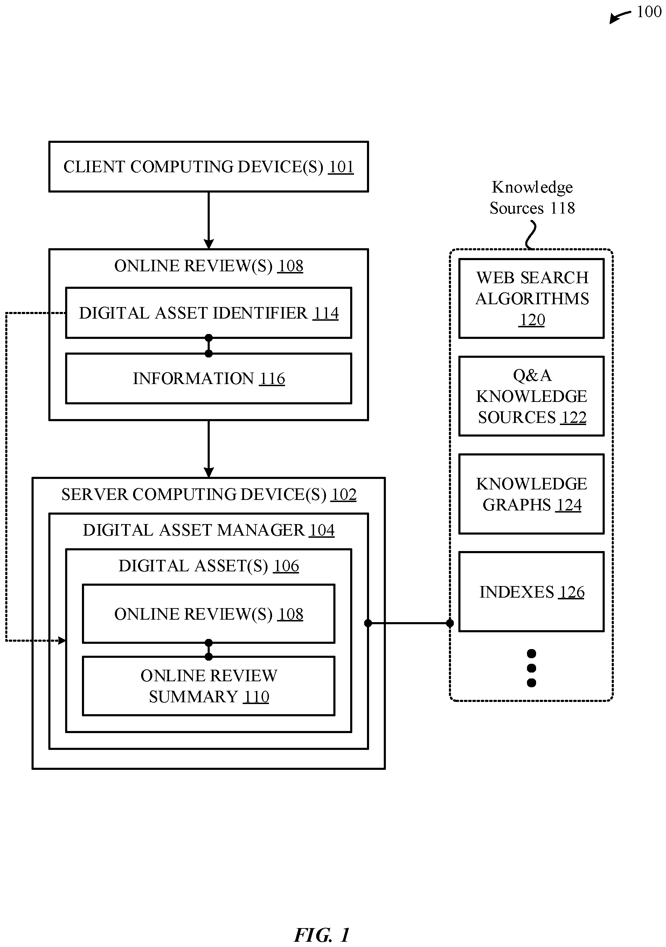

FIG. 1 illustrates a block diagram of different components of a system 100 that can be configured to implement the various techniques described herein, according to some embodiments. As shown in FIG. 1, the system 100 can include client computing devices 101 and server computing devices 102. It is noted that, in the interest of simplifying this disclosure, the client computing devices 101 and the server computing devices 102 are typically discussed in singular capacities. In that regard, it should be appreciated that the system 100 can include any number of client computing devices 101 and server computing devices 102, consistent with the scope of this disclosure.

According to some embodiments, the client computing device 101 and the server computing device 102 can represent any form of computing device operated by an individual, an entity, etc., such as a wearable computing device, a smartphone computing device, a tablet computing device, a laptop computing device, a desktop computing device, a gaming computing device, a smart home computing device, an Internet of Things (IOT) computing device, a rack mount computing device, and so on. It is noted that the foregoing examples are not meant to be limiting, and that each of the client computing device 101 / server computing device 102 can represent any type, form, etc., of computing device, consistent with the scope of this disclosure.

As shown in FIG. 1, the client computing device 101 can provide online reviews 108 to the server computing device 102. According to some embodiments, each online review 108 can include a digital asset identifier 114 (e.g., a unique identifier (ID)) that refers to a digital asset 106 that is managed by, known to, etc., a digital asset manager 104 that is implemented on the server computing device 102. Each online review 108 can also include information 116, which can represent text content, media content, etc., associated with an online review of the digital asset 106 (to which the digital asset identifier 114 corresponds). It is noted that the foregoing examples are not meant to be limiting, and that the information 116 can include any amount, type, form, etc., of data, content, etc., at any level of granularity, consistent with the scope of this disclosure.

As shown in FIG. 1, the server computing device 102 can implement a digital asset manager 104 that is configured to manage digital assets 106. For example, the digital asset manager 104 can represent an online software application store that enables users to browse information about software applications, purchase / download / install software the applications, and so on. In another example, the digital asset manager 104 represents an online product store that enables users to browse information about products (digital, physical, etc.), purchase / receive the products, and so on. In yet another example, the digital asset manager 104 represents an online publication that provides news articles. In these examples, users can be permitted to submit, to the digital asset manager 104, online reviews 108 associated with digital assets 106 managed by the digital asset manager 104. It is noted that the foregoing examples are not meant to be limiting, and that the digital asset manager 104 can represent any type, form, etc., of entity that manages digital assets 106 for which online reviews can be received, consistent with the scope of this disclosure.

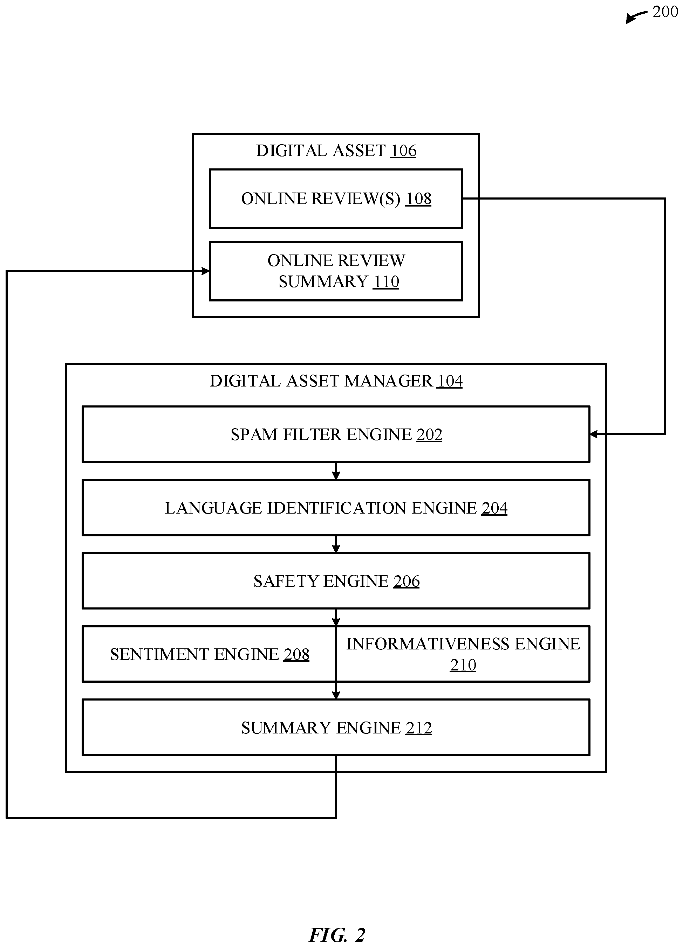

As described herein, and as shown in FIG. 1, each digital asset 106 can be associated with one or more online reviews 108 that are received from client computing devices 101. Moreover, each digital asset 106 can be associated with an online review summary 110. According to some embodiments, and as described below in greater detail in conjunction with FIG. 2, the digital asset manager 104 can be configured to generate the online review summary 110 for a given digital asset 106 by, at least in part, processing, interpreting, etc., one or more online reviews 108 received for the digital asset 106.

According to some embodiments, the digital asset manager 104 can implement one or more artificial intelligence (AI) models to effectively interpret online reviews 108. For example, the digital asset manager 104 can implement small language models (SLMs), large language models (LLMs), rule-based models, traditional machine learning models, custom models, ensemble models, knowledge graph models, hybrid models, domain-specific models, sparse models, transfer learning models, symbolic artificial intelligence (AI) models, generative adversarial network models, reinforcement learning models, biological models, and the like. It is noted that the foregoing examples are not meant to be limiting, and that any number, type, form, etc., of AI models, can be implemented by the digital asset manager 104-and/or other entities with which the server computing device 102 / digital asset manager 104 collaborates-to effectively interpret online reviews 108, consistent with the scope of this disclosure. It is also noted that the digital asset manager 104 can implement non-AI-based entities, such as rules-based systems, knowledge-based systems, and so on, to effectively interpret online reviews 108.

According to some embodiments, the digital asset manager 104 can implement one or more AI models to effectively generate an online review summary 110 based on characteristics of the digital asset 106, the interpreted one or more online reviews 108, and so on. For example, the digital asset manager 104 can implement generative adversarial networks (GANs), variational autoencoders (VAEs), recurrent neural networks (RNNs), convolutional neural networks (CNNs), neuroevolution systems, deep dream systems, style transfer systems, rule-based systems, interactive evolutionary algorithms, and so on. It is noted that the digital asset manager 104 can be configured to identify and eliminate "AI hallucinations," which refer to the generation of false or distorted perceptions, ideas, or sensations by AI systems. This phenomenon can occur when AI models, such as LLMs, generate outputs that are not based on real data but instead originate from patterns or noise present in their training data or model architecture. Such hallucinations can manifest as incorrect information, fantastical scenarios, nonsensical sentences, or a blend of real and fabricated content. It is noted that the foregoing examples are not meant to be limiting, and that any number, type, form, etc., of Ai models, can be implemented by the digital asset manager 104-and/or other entities with which the server computing device 102 / digital asset manager 104 collaborates-to generate an online review summary 110, consistent with the scope of this disclosure. It is also noted that the digital asset manager 104 can implement non-AI-based entities, such as rules-based systems, knowledge-based systems, and so on, to effectively generate an online review summary 110.

As further shown in FIG. 1, the server computing device 102-particularly, the digital asset manager 104-can be configured to interface with knowledge sources 118 to enhance the manners in which the digital asset manager 104 interprets online reviews 108 and generates online review summaries 110. The knowledge sources 118 can include, for example, web search engines 120, question and answer (Q&A) knowledge sources 122, knowledge graphs 124, indexes 126 (e.g., databases, approximate nearest-neighbor (ANN) indexes, inverted indexes, etc.), and so on. It is noted that the knowledge sources 118 illustrated in FIG. 1 and described herein are not meant to be limiting, and that the server computing device 102 / digital asset manager 104 can be configured to access any type, kind, form, etc., of knowledge source 118 that is capable of receiving queries and providing responses, consistent with the scope of this disclosure. It should also be understood that the knowledge sources 118 can employ any number, type, form, etc., of AI models (or non-AI based approaches) to provide the various functionalities described herein, consistent with the scope of this disclosure. It should further be understood that the knowledge sources 118 can be implemented by any computing entity (e.g., the server computing device 102, other computing devices, etc.), service (e.g., cloud services), etc., consistent with the scope of this disclosure.

According to some embodiments, the web search engines 120 can represent web search entities that are capable of receiving queries and providing answers based on what is accessible via the Internet. To implement this functionality, the web search engines 120 can "crawl" the Internet, which involves identifying, parsing, and indexing the content of web pages, such that relevant content can be efficiently identified for search queries that are received.

According to some embodiments, the Q&A knowledge sources 122 can represent systems, databases, etc., that can formulate answers to questions that are commonly received. To implement this functionality, the Q&A knowledge sources 122 typically rely on structured or semi-structured knowledge bases that contain a wide range of information, facts, data, or textual content that is manually curated, generated from text corpora, or collected from various sources, such as books, articles, databases, or the Internet.

According to some embodiments, the knowledge graphs 124 can represent systems, databases, etc., that can be accessed to formulate answers to queries that are received. A given knowledge graph 124 typically constitutes a structured representation of knowledge that captures relationships and connections between entities, concepts, data points, etc. in a way that computing devices are capable of understanding.

According to some embodiments, the indexes 126 can represent systems, databases, etc., that can be accessed to formulate answers to queries that are received. For example, the indexes 126 can include an ANN index that constitutes a data structure that is arranged in a manner that enables similarity searches and retrievals in high-dimensional spaces to be efficiently performed. This makes the ANN indexes particularly useful when performing tasks that involve semantic information retrieval, recommendations, and finding similar data points, objects, and so on.

It is noted that the logical breakdown of the entities illustrated in FIG. 1-as well as the logical flow of the manner in which such entities communicate-should not be construed as limiting. On the contrary, any of the entities illustrated in FIG. 1 can be separated into additional entities within the system 100, combined together within the system 100, or removed from the system 100, consistent with the scope of this disclosure.

Additionally, it should be understood that the various components of the computing devices illustrated in FIG. 1 are presented at a high level in the interest of simplification. For example, although not illustrated in FIG. 1, it should be appreciated that the various computing devices can include common hardware / software components that enable the above-described software entities to be implemented. For example, each of the computing devices can include one or more processors that, in conjunction with one or more volatile memories (e.g., a dynamic random-access memory (DRAM)) and one or more storage devices (e.g., hard drives, solid-state drives (SSDs), etc.), enable the various software entities described herein to be executed. Moreover, each of the computing devices can include communications components that enable the computing devices to transmit information between one another.

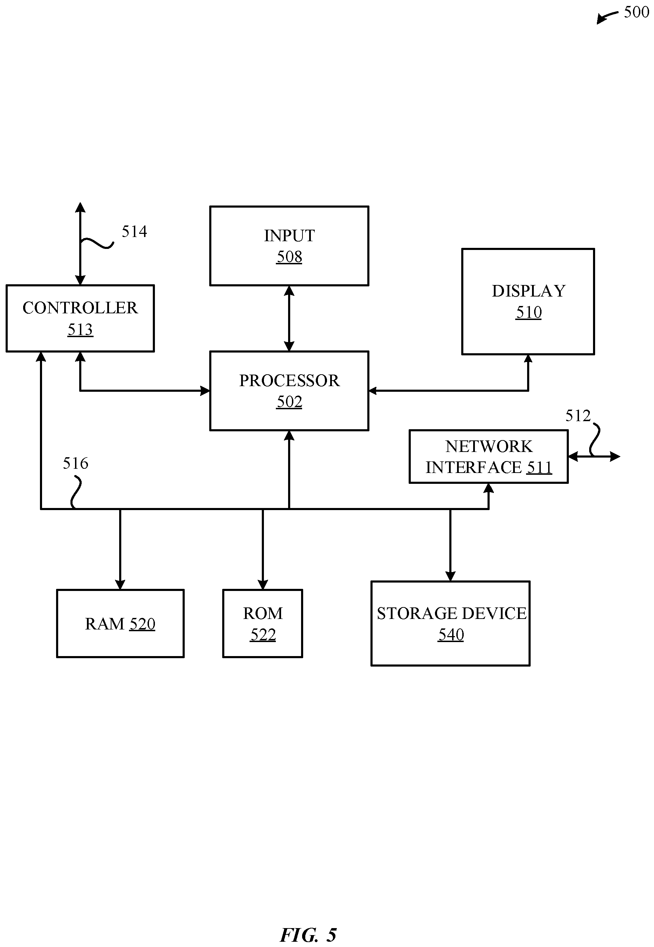

A more detailed explanation of these hardware components is provided below in conjunction with FIG. 5. It should additionally be understood that the computing devices can include other entities that enable the implementation of the various techniques described herein, consistent with the scope of this disclosure. It should additionally be understood that the entities described herein can be combined or split into additional entities, consistent with the scope of this disclosure. It should further be understood that the various entities described herein can be implemented using software-based or hardware-based approaches, consistent with the scope of this disclosure.

Accordingly, FIG. 1 provides an overview of the manner in which different computing devices can be configured to implement the various techniques described herein, according to some embodiments. A more detailed breakdown of the manner in which these techniques can be implemented will now be provided below in conjunction with FIGS. 2-5.

FIG. 2 illustrates a block diagram 200 of a more detailed view of the digital asset manager 104, according to some embodiments. As shown in FIG. 2, the digital asset manager 104 can invoke a process that generates, updates, etc., an online review summary 110 for a given digital asset 106. The digital asset manager 104 can invoke the process in response to, for example, a threshold amount of time lapsing, a threshold number of online reviews 108 being received for the digital asset 106, receiving a request (to invoke the process), and so on. It is noted that the foregoing examples are not meant to be limiting, and that the digital asset manager 104 can be configured to implement the process based on any number, type, form, etc., of conditions being satisfied, consistent with the scope of this disclosure.

As shown in FIG. 2, the digital asset manager 104 can be configured to implement a spam filter engine 202, a language identification engine 204, a safety engine 206, a sentiment engine 208, an informativeness engine 210, and a summary engine 212, each of which can be implemented using the AI-based approaches/techniques and/or the non-AI based approaches/techniques described herein. It should be understood these entities can be combined into fewer entities, and/or separated into other entities, consistent with the scope of this disclosure.

According to some embodiments, the spam filter engine 202 can function as an initial filter for identifying online reviews 108 that should be disregarded. For example, the spam filter engine 202 can identify duplicate online reviews 108, online reviews 108 submitted by users, client computing devices 101, etc., that have been flagged as untrustworthy (e.g., through prior analyses of online reviews 108 submitted by the aforementioned users, client computing devices 101, etc.), and so on. It is noted that the foregoing examples are not meant to be limiting, and that the spam filter engine 202 can be configured to filter a given online review 108 based on any number, type, form, etc., of reason(s), at any level of granularity, consistent with the scope of this disclosure.

When the online reviews 108 have been filtered by the spam filter engine 202, the remaining online reviews 108 can be provided to the language identification engine 204, the safety engine 206, the sentiment engine 208, and the informativeness engine 210 for processing. In turn, and as described below, the processed online reviews 108 can be provided to the summary engine 212 to generate an online review summary 110 that corresponds to the digital asset 106, the online reviews 108, and so on.

According to some embodiments, the language identification engine 204 can be configured to identify the type of language associated with the online review 108 that is currently being processed. In this manner, digital asset manager 104 can utilize the appropriate AI model(s), rule-based models, etc. (e.g., within the safety engine 206, the sentiment engine 208, the informativeness engine 210, etc.) to effectively analyze, interpret, qualify, etc., the online review 108. In some cases, a given online review 108 may be written in two or more languages. When this occurs, the language identification engine 204 can be configured to identify the appropriate AI model(s), rule-based models, etc., that should be utilized to process the different portions of the online review 108 that are written in different languages. It is noted that the foregoing examples are not meant to be limiting, and that the language identification engine 204 can be configured to identify the language(s) of an online review 108 based on any amount, type, form, etc., of information, at any level of granularity, consistent with the scope of this disclosure.

According to some embodiments, the safety engine 206 can be configured to identify whether the online review 108 that is currently being processed violates any safety considerations. For example, the online review 108 can be classified as one that includes offensive content, violent content, sexual content, personal content, advertisement content, gibberish content, or some combination thereof. It is noted that the foregoing examples are not meant to be limiting, and that the online review 108 can be associated with any amount, type, form, etc., of safety classifications, at any level of granularity, consistent with the scope of this disclosure. If the online review 108 violates any safety considerations, then the online review 108 can be disregarded when generating the online review summary 110. Further action can also be taken on a given online review 108 that safety considerations (e.g., beyond a threshold level), such as flagging the user, client computing device 101, etc., that submitted the online review 108. In this manner, future online reviews 108 submitted by the user, client computing device 101, etc., can be captured by the spam filter engine 202, or at the very least, undergo a higher level of scrutiny.

According to some embodiments, the sentiment engine 208 can be configured to identify a general sentiment of the online review 108 that is currently being processed. For example, the online review 108 can be classified as one that is positive, neutral, or negative in sentiment. It is noted that the foregoing examples are not meant to be limiting, and that the online review 108 can be associated with any amount, type, form, etc., of sentiment classifications, at any level of granularity, consistent with the scope of this disclosure.

According to some embodiments, the informativeness engine 210 can be configured to identify an overall informativeness of the online review 108 that is currently being processed. For example, the online review 108 can be classified as one that is highly informative, moderately informative, or minimally informative. It is noted that the foregoing examples are not meant to be limiting, and that the online review 108 can be associated with any amount, type, form, etc., of informativeness classifications, at any level of granularity, consistent with the scope of this disclosure.

Accordingly, when one or more of the online reviews 108 has been processed by the language identification engine 204, safety engine 206, sentiment engine 208, and informativeness engine 210, each online review 108 is associated with a safety classification, a sentiment classification, and an informativeness classification. It should be understood that additional engines can be implemented by the digital asset manager 104 to determine, assign, etc., additional / different classifications to the online review 108, consistent with the scope of this disclosure. In any case, the summary engine 212 can be configured to generate an online review summary 110 based on the digital asset 106 and the processed online reviews 108.

According to some embodiments, the online review summary 110 can be structured to include a first segment that describes the digital asset 106. For example, the summary engine 212 can analyze information associated with the digital asset 106 (e.g., a description of the digital asset 106 provided by an entity that manages the digital asset 106), information associated with the processed online reviews 108, and so on. It is noted that the foregoing example is not meant to be limiting, and that the summary engine 212 can generate the first segment based on any amount, type, form, etc., of information, at any level of granularity, consistent with the scope of this disclosure.

According to some embodiments, the online review summary 110 can be structured to include a second segment that describes positive aspects of the digital asset 106. For example, the summary engine 212 can identify processed online reviews 108 that are characterized as being positive in sentiment, identify relevant aspects of the online reviews 108 (that resulted in the online reviews 108 being classified as positive in sentiment), and so on. It is noted that the foregoing example is not meant to be limiting, and that the summary engine 212 can generate the second segment based on any amount, type, form, etc., of information, at any level of granularity, consistent with the scope of this disclosure.

According to some embodiments, the online review summary 110 can be structured to include a third segment that describes negative aspects of the digital asset 106. For example, the summary engine 212 can identify processed online reviews 108 that are characterized as being negative in sentiment, identify relevant aspects of the online reviews 108 (that resulted in the online reviews 108 being classified as negative in sentiment), and so on. It is noted that the foregoing example is not meant to be limiting, and that the summary engine 212 can generate the third segment based on any amount, type, form, etc., of information, at any level of granularity, consistent with the scope of this disclosure.

It should be appreciated that the online review summary 110 can be structured to include additional, fewer, different, etc., segments, consistent with the scope of this disclosure. It should also be appreciated that the online review summary 110 can be structured in accordance with a type of the digital asset 106, characteristics of the online reviews 108 received for the digital asset 106, and so on. For example, each type of digital asset 106 can be associated with a respective template that dictates the structure, content, etc., of the online review summaries 110 that are generated for digital assets 106 of that type.

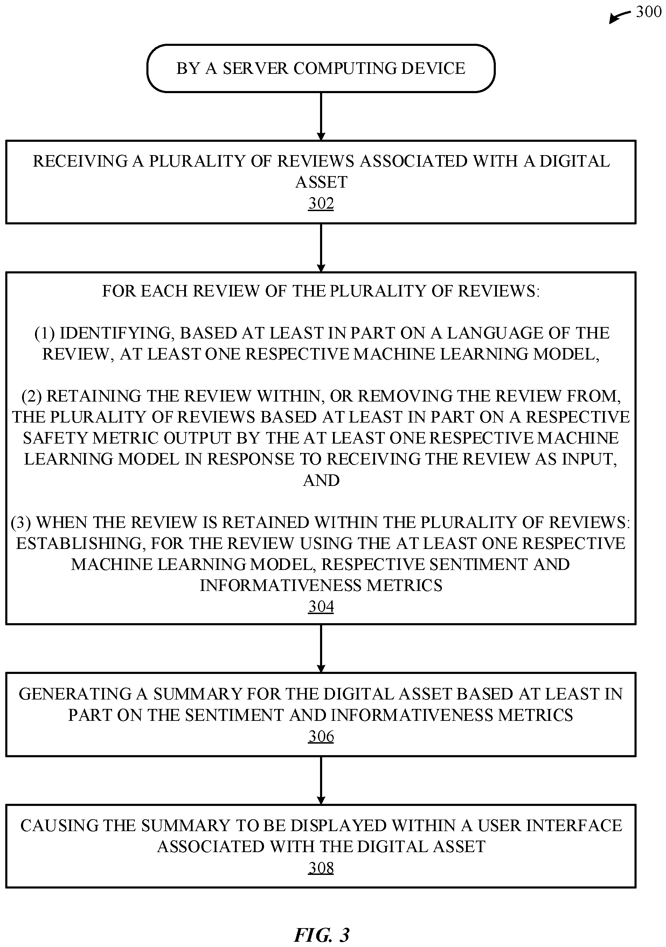

FIG. 3 illustrates a method 300 for managing information for digital assets, according to some embodiments. As shown in FIG. 3, the method 300 begins at step 302, where the server computing device 102 receives a plurality of reviews associated with a digital asset (e.g., as described above in conjunction with FIGS. 1-2).

At step 304, the server computing device 102 performs the following steps for each review of the plurality of reviews: (1) identifying, based at least in part on a language of the review, at least one respective machine learning model, (2) retaining the review within, or removing the review from, the plurality of reviews based at least in part on a respective safety metric output by the at least one respective machine learning model in response to receiving the review as input, and (3) when the review is retained within the plurality of reviews: establishing, for the review using the at least one respective machine learning model, respective sentiment and informativeness metrics (e.g., as described above in conjunction with FIGS. 1-2).

At step 306, the server computing device 102 generates a summary for the digital asset based at least in part on the sentiment and informativeness metrics (e.g., as described above in conjunction with FIGS. 1-2).

At step 308, the server computing device 102 causes the summary to be displayed within a user interface associated with the digital asset (e.g., as described above in conjunction with FIGS. 1-2).

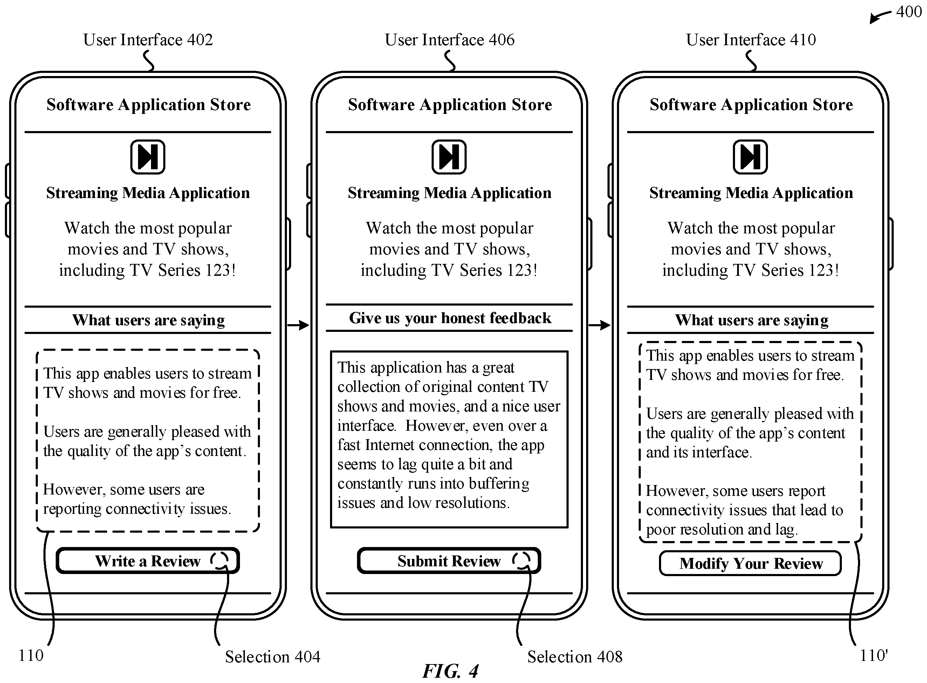

FIG. 4 illustrates conceptual diagrams 400 of different user interfaces that can be displayed for managing information for digital assets, according to some embodiments. As shown in FIG. 4, a user interface 402 of a software application store displays a product page for a streaming media application (i.e., a digital asset 106). In particular, the user interface 402 displays an online review summary 110 ("This app enables users to stream...") for the streaming media application (e.g., an online review summary 110 that was generated based on receipt / processing of prior online reviews 108 in accordance with the techniques described herein (illustrated in FIG. 4 as 110)). The user interface 402 also enables a new online review 108 to be submitted, which is selected by way of the selection 404.

In response to the selection 404, the software application store displays a user interface 406, which enables the new online review 108 to be input ("This application has a great collection... "). The user interface 406 also enables the new online review 108 to be submitted, which is selected by way of the selection 408. In response to the selection 408, the software application store displays a user interface 410, which includes an updated online review summary 110 (generated in accordance with the techniques described herein) that reflects the new online review summary 110 (illustrated in FIG. 4 as 110') submitted by way of the selection 408.

FIG. 5 illustrates a detailed view of a computing device 500 that can be used to implement the various components described herein, according to some embodiments. In particular, the detailed view illustrates various components that can be included in the computing devices described above in conjunction with FIG. 1.

As shown in FIG. 5, the computing device 500 can include a processor 502 that represents a microprocessor or controller for controlling the overall operation of computing device 500. The computing device 500 can also include a user input device 508 that allows a user of the computing device 500 to interact with the computing device 500. For example, the user input device 508 can take a variety of forms, such as a button, keypad, dial, touch screen, audio input interface, visual/image capture input interface, input in the form of sensor data, etc. Furthermore, the computing device 500 can include a display 510 (screen display) that can be controlled by the processor 502 to display information to the user. A data bus 516 can facilitate data transfer between at least a storage device 540, the processor 502, and a controller 513. The controller 513 can be used to interface with and control different equipment through an equipment control bus 514. The computing device 500 can also include a network/bus interface 511 that couples to a data link 512. In the case of a wireless connection, the network/bus interface 511 can include a wireless transceiver.

The computing device 500 also includes a storage device 540, which can comprise a single disk or a plurality of disks (e.g., SSDs), and includes a storage management module that manages one or more partitions within the storage device 540. In some embodiments, storage device 540 can include flash memory, semiconductor (solid state) memory or the like. The computing device 500 can also include a Random-Access Memory (RAM) 520 and a Read-Only Memory (ROM) 522. The ROM 522 can store programs, utilities, or processes to be executed in a non-volatile manner. The RAM 520 can provide volatile data storage, and stores instructions related to the operation of the computing devices described herein.

The various aspects, embodiments, implementations, or features of the described embodiments can be used separately or in any combination. Various aspects of the described embodiments can be implemented by software, hardware or a combination of hardware and software. The described embodiments can also be embodied as computer readable code on a computer readable medium. The computer readable medium is any data storage device that can store data that can be read by a computer system. Examples of the computer readable medium include read-only memory, random-access memory, CD-ROMs, DVDs, magnetic tape, hard disk drives, solid state drives, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

As described herein, one aspect of the present technology is the gathering and use of data available from various sources to improve user experiences. The present disclosure contemplates that in some instances, this gathered data may include personal information data that uniquely identifies or can be used to contact or locate a specific person. Such personal information data can include demographics data, location-based data, telephone numbers, email addresses, home addresses, data or records relating to a user's health or level of fitness (e.g., vital signs measurements, medication information, exercise information), date of birth, smart home activity, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users.

Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select to provide only certain types of data that contribute to the techniques described herein. In addition to providing "opt in" and "opt out" options, the present disclosure contemplates providing notifications relating to the access or use of personal information. For instance, a user may be notified that their personal information data may be accessed and then reminded again just before personal information data is accessed.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

## Claims

1. A method for managing information for digital assets, the method comprising, by a computing device:
receiving a plurality of reviews associated with a digital asset;
for each review of the plurality of reviews:
identifying, based at least in part on a language of the review, at least one respective machine learning model,
retaining the review within, or removing the review from, the plurality of reviews based at least in part on a respective safety metric output by the at least one respective machine learning model in response to receiving the review as input, and
when the review is retained within the plurality of reviews:
establishing, for the review using the at least one respective machine learning model, respective sentiment and informativeness metrics;
generating a summary for the digital asset based at least in part on the sentiment and informativeness metrics; and
causing the summary to be displayed within a user interface associated with the digital asset.

2. The method of claim 1, further comprising, for each review of the plurality of reviews, and prior to identifying the at least one respective machine learning model:
identifying at least one review that qualifies as spam; and
removing the review from the plurality of reviews.

3. The method of claim 1 or 2, wherein, for a given review of the plurality of reviews:
the respective safety metric is output by a first large language model (LLM);
the respective sentiment metric is established using a second LLM; and
the respective informativeness metric is established using a third LLM, wherein the first, second, and third LLMs are distinct from one another.

4. The method of any preceding claim, wherein, for a given review of the plurality of reviews, the respective safety metric is based on whether the given review includes offensive content, violent content, sexual content, personal content, advertisement content, gibberish content, or some combination thereof.

5. The method any preceding claim, wherein, for a given review of the plurality of reviews:
the respective sentiment metric indicates whether the given review is positive, neutral, or negative;
the respective informativeness metric indicates whether the given review is highly informative, moderately informative, or minimally informative.

6. The method any preceding claim, wherein:
the digital asset comprises a software application; and
the user interface comprises a software application store that enables the software application to be downloaded and installed onto client computing devices.

7. The method any preceding claim, wherein the summary comprises:
a first segment that describes the digital asset;
a second segment that describes positive aspects of the digital asset; and
a third segment that describes negative aspects of the digital asset.

8. A computing device configured to manage information for digital assets, the computing device comprising:
at least one processor; and
at least one memory storing instructions that, when executed by the at least one processor, cause the computing device to carry out steps that include at least one processor configured to cause the computing device to carry out steps that include:
receiving a plurality of reviews associated with a digital asset;
for each review of the plurality of reviews:
identifying, based at least in part on a language of the review, at least one respective machine learning model,
retaining the review within, or removing the review from, the plurality of reviews based at least in part on a respective safety metric output by the at least one respective machine learning model in response to receiving the review as input, and
when the review is retained within the plurality of reviews:
establishing, for the review using the at least one respective machine learning model, respective sentiment and informativeness metrics;
generating a summary for the digital asset based at least in part on the sentiment and informativeness metrics; and
causing the summary to be displayed within a user interface associated with the digital asset.

9. The computing device of claim 8, wherein the steps further include, for each review of the plurality of reviews, and prior to identifying the at least one respective machine learning model:
identifying at least one review that qualifies as spam; and
removing the review from the plurality of reviews.

10. The computing device of claim 8 or 9, wherein, for a given review of the plurality of reviews:
the respective safety metric is output by a first large language model (LLM);
the respective sentiment metric is established using a second LLM; and
the respective informativeness metric is established using a third LLM, wherein the first, second, and third LLMs are distinct from one another.

11. The computing device of any of claims 8 to 10, wherein, for a given review of the plurality of reviews, the respective safety metric is based on whether the given review includes offensive content, violent content, sexual content, personal content, advertisement content, gibberish content, or some combination thereof.

12. The computing device of any of claims 8 to 11, wherein, for a given review of the plurality of reviews:
the respective sentiment metric indicates whether the given review is positive, neutral, or negative;
the respective informativeness metric indicates whether the given review is highly informative, moderately informative, or minimally informative.

13. The computing device of any of claims 8 to 12, wherein:
the digital asset comprises a software application; and
the user interface comprises a software application store that enables the software application to be downloaded and installed onto client computing devices.

14. The computing device of any of claims 8 to 13, wherein the summary comprises:
a first segment that describes the digital asset;
a second segment that describes positive aspects of the digital asset; and
a third segment that describes negative aspects of the digital asset.
